# EUROPEAN PATENT SPECIFICATION

(11) **EP 2 071 385 B1**
(45) Date of publication and mention of the grant of the patent: **22.07.2020**
(21) Application number: 08005806.8
(22) Date of filing: 27.03.2008
(51) Int. Cl.: G02B 26/00, G09F 9/37, G02B 26/02

(54) **Electrowetting element**
Elektrowettingelement
Élément d'électromouillage

(30) Priority: 11.12.2007 EP 07023982
(43) Date of publication of application: 17.06.2009
(73) Proprietor: Miortech Holding B.V., 5658 AE Eindhoven (NL)
(72) Inventor: Feil, Hermanus, 5551 XN Valkenswaard (NL)
(74) Representative: Algemeen Octrooi- en Merkenbureau B.V.

(56) References cited:
- WO-A-2005/038764
- WO-A-2005/096066
- US-A1- 2002 185 378
- HAYES R A ET AL: "Video-speed electronic paper based on electrowetting" NATURE, NATURE PUBLISHING GROUP, LONDON, UK, vol. 425, no. 6956, 25 September 2003 (2003-09-25), pages 383-385, XP002286158 ISSN: 0028-0836

## Description

### Field of the Invention

The present invention relates generally to electrowetting elements, and in particular to electrowetting element comprising a first electrode layer having a hydrophobic surface and a second electrode layer opposite said hydrophobic surface, a containment space formed between said first and said second electrode layer, wherein said containment space comprises a mixture of at least one polar liquid having a first conductivity and at least one non-polar liquid having a second conductivity, and wherein said electrowetting element further comprises powering means for controllably powering said first and second electrode layers for rearranging said polar liquid relative to said non-polar liquid for switching said electrowetting element between an optically transmissive and optically non-transmissive state.

The present invention further relates to use of a polar liquid in an electrowetting element.

### Background of the Invention

Electrowetting technology is based on modification of an energy balance between on one hand surface tension forces of liquids and wetting properties of a solid surface, and on the other hand electrostatic forces induced by an applied voltage over a capacitor arrangement comprising said boundary layer.

An electrowetting element may subsequently from bottom to top be comprised of respectively a first electrode layer, an electrically insulating hydrophobic layer (i.e. having a hydrophobic surface on a side opposite the side adjacent or nearest to the first electrode layer), a mixture of two liquids comprising at least a polar liquid and a non-polar liquid, and a second electrode in contact with at least the polar liquid. In practice, the liquids are contained in between for example pixel walls forming a containment tray and a top glass plate.

Various materials can be used for the electrically insulating hydrophobic layer, e.g. teflon^{tm} (Polytetrafluoroethyline (PTFE)) is a suitable material having suitable optical and electrical properties. Materials which are to a large extend hydrophobic are considered preferrable in the field of technology. As a non-polar liquid, one may use an oil such as decane. The selection criteria for selecting a suitable non-polar liquid include (apart from the liquid being non-polar), dielectric constant sufficiently large (the liquid is preferably a good isolator, or at least a poor conductor) and having an optical transmission coefficient that is suitable for the application wherein it is used (in practice the liquid will have low transmissibility, but in the present invention, a certain (small) degree of transmissibility may be advantageous, though not essential). Optical properties may be modified or adapted by introducing a small percentage of a dye in the non-polar liquid as an additive. The polar liquid preferably has good conductive properties, and should additionally be selected with respect to its optical properties. Preferably, the polar liquid is optically transmissive. Water is a preferred choice of polar liquid in the field of electrowetting elements.

The principles of operation of an electrowetting element are as follows. In an unpowered state, i.e. when no voltage is applied over the first and second electrode, the lowest energetic state of the system is where the non-polar liquid forms a boundary layer between the polar liquid and the hydrophobic surface of the insulating layer. This is because the polar liquid is repelled by the hydrophobic layer. The poor transmissibility of the non-polar liquid then forms an obstruction to light that penetrates the system. When a voltage is applied over the electrodes, the lowest energetic state of the system becomes the situation wherein the (poorly conductive or insulating) non-polar liquid is pushed aside by the (conductive) polar liquid, and the polar liquid thereby being in direct contact with the insulating hydrophobic layer. Note that the voltage must be large enough for the electrostatic forces to overcome the repellent and surface tension forces that separate the polar liquid from the hydrophobic surface. In this situation, light that penetrates the system has rather unobstructed access to the insulating hydrophobic layer because of the well transmissibility of the polar liquid and the non-polar liquid being pushed aside.

Upon switching the electrodes from the powered state back to the unpowered state, by taking away the voltage that is applied to the electrodes, the equilibrium of forces present in the powered state is destroyed and the system will commence to turn back to the lowest energetic state of the system that was present before the electrodes were powered. A problem experienced with prior art electrowetting elements, like the electro-wetting display disclosed in WO2005/038764, is that pixels of the system may not close after being opened. This problem is in the prior art resolved by increasing the porosity of the hydrophobic contact surface of the element. By increasing the porosity, the non-polar and often oily liquid is able to entrain the pores or microvoids in the hydrophobic contact layer, enabling the oil in each pixel to open and close more easily such as to prevent the
above problem to occur.

A disadvantage of this solution is that by increasing the porosity of the hydrophobic contact layer, during use the polar liquid (e.g. water) may quite easily fill the pores or microvoids of the layer once a voltage is applied to the electrodes of the electrowetting elements and the polar liquid is in contact with the contact surface. The polar liquid may remain in the pores once the voltage is again turned off. This will deteriorate the electrowetting element, because the contact surface becomes hydrophilic in those areas of the surface wherein the polar liquid has entrained the microvoids. Therefore, over time, it may occur that an electrowetting element that used to function perfectly directly after it was manufactured, deteriorates, leading to more and more non-closing pixels. This deteriorates the display quality of the electrowetting element and shortens the lifetime thereof.

Another disadvantage of microvoids being entrained by polar liquid, is that the electrically conducting polar liquid makes contact with the electrode through the microvoids in the insulating layer, electrically bridging the insulating layer and causing an electrical short. The electrowetting element is thereby destroyed.

Even without increasing the porosity of the hydrophobic surface as suggested above, the surface to a certain extent usually comprises voids, pores and other imperfections. Therefore, the abovementioned problem may be experienced even without increasing the porosity.

### Summary of the Invention

The present invention has for its objects to resolve the above mentioned problems of the prior art, and provide an improved electrowetting element.

This and other objects is achieved by the present invention as defined in the independent claims.
There is provided an electrowetting element comprising a first electrode layer having a hydrophobic surface and a second electrode layer opposite said hydrophobic surface, a containment space formed between said first and said second electrode layer, wherein said containment space comprises a mixture of at least one polar liquid having a first conductivity and at least one non-polar liquid having a second conductivity, and wherein said electrowetting element further comprises powering means for controllably powering said first and second electrode layers for rearranging said polar liquid relative to said non-polar liquid for switching said electrowetting element between an optically transmissive and optically non-transmissive state, characterized in that, said polar liquid comprises at least one substance comprised of particles having a particle size matching an average void size of voids present in said hydrophobic surface, for clogging one or more of said voids.

The invention is based on the insight that penetration of the polar liquid into the voids of the hydrophobic surface can be limited by clogging the voids with large particles. In particular, if the size of the particles is comparable with the size of the voids, for example when the particles have a particle size such that a void may be clogged by one or a few particles, penetration of the hydrophobic surface by the polar liquid may be prevented, or at least effectively reduced.

The term 'matching' used above is to be interpreted as meaning that the particle size is complementary to the void size in such a manner that the result of clogging of the voids may be achieved. The term matching is not to be interpreted as being limited to 'equal'. As will be understood, a particle size such that voids can be clogged by a few particles, say four or five as a non-limiting example, satisfies the above definition of 'matching'. Similarly, a particle size approximately equal to the void size, such that voids may be clogged by a single particle, also satisfies the definition above. Particle sizes being such that voids may only be clogged by for example fifty or more particles will not be productive, unless the hydrophobic surface comprises voids of very different sizes, spanning at least one order of a magnitude.

According to embodiments of the invention, said particle size may either be of a same order of magnitude as said average void size, or may be one order of a magnitude smaller than said average void size. It will be appreciated that if the size of the voids is largely variable, statistically having a standard deviation of a same order of a magnitude as the average void size, it may be advantageous to have particles having a particle size matching with a plurality of void sizes in the range of available void sizes. It may then be advantageous to have particles having different sizes, viz. a particle size of a same or slightly smaller order of a magnitude (i.e, same order or one order of magnitude smaller) as the minimum void size, as well as a particle size of a same or slightly smaller order of a magnitude (i.e. same order or one order of magnitude smaller) as the maximum void size, and optionally some particles sizes in between. Therefor, according to another embodiment, said polar liquid comprises one or more substances comprising additional particles having one or more additional particle sizes. The particles of different size may be comprised by said same substance as defined hereinabove, or may be comprised by one or more additional substances.

The particles of said substance may, according to an embodiment, be molecules of said substance, where said particle size is a molecular size of said molecules. One may for example think of salt ions comprising a solvation shell made up of water molecules. Even if the salt ion itself is small, the relatively large solvation shell may provide the particle a sufficiently large molecular size (particle size), making it suitable for the present use.

According to a preferred embodiment, said particles are electrically charged particles. This provides the advantage that, upon powering the electrodes of the electrowetting element such as to switch the electrowetting element to an optrically transmissive state, said charged particles can be attracted to the electrode covered by the hydrophobic surface under influence of electrostatic forces between the charged particles and the charged electrode. The probability of the particles clogging the voids of the hydrophobic surface is thereby increased. This may be achieved by a substance which is solvable in said polar liquid, providing charged ions solved in the polar liquid.

The substance may be selected from a group comprising calcium lactobionate monohydrate, 4,4'-diazido-2,2'-stilbenedisulfonic acid disodium salt tetrahydrate, and other water solvable salts, nano-particles such as TiO₂ nano-particles, pigments and other suitable substances. Of course other type of particles may be suitable for the present use.

According to a second aspect of the present invention, there is provided a Use of a polar liquid in an electrowetting element, said electrowetting element comprising a first electrode layer having a hydrophobic surface and a second electrode layer opposite said hydrophobic surface, a containment space formed between said first and said second electrode layer, wherein said containment space comprises a mixture of said polar liquid having a first conductivity and at least one non-polar liquid having a second conductivity, and wherein said electrowetting element further comprising powering means for controllably powering said first and second electrode layers for rearranging said polar liquid relative to said non-polar liquid for switching said electrowetting element between an optically transmissive and optically non-transmissive state, characterized in that, said polar liquid comprises at least one substance comprised of particles having a particle size matching an average void size of voids present in said hydrophobic surface, for clogging one or more of said voids.

The present invention may be applied to any type of electrowetting element, suitable for any use. Although most suitable for electrowetting elements comprising insulating layers having a relatively large degree of porosity, it may also be applied in electrowetting elements wherein the surface of the insulating layer is relatively smooth and free from voids. The presence of some voids in the insulating layer of hydrophobic layer is very difficult to prevent completely, if at all possible. Therefore, application of the present invention will be beneficial in all types of electrowetting elements.

An example of an electrowetting element wherein the level of surface porosity of the hydrophobic surface or insulating surface is relatively low, is a type of electrowetting element wherein the insulating layer is coated with a (mono)layer of alkylsilane in combination with a suitably selected non-polar- liquid, such as decane. In this type of electrowetting element, the alkylsilane coating has the effect that there is no need for porosity at the surface layer, making microvoids completely obsolete. However, since the presence of voids in such a device cannot be prevented completely (without undue burden), the application of the presence invention is beneficial even in this case. The invention is not limited to this specific application, as mentioned above.

### Brief Description of the Drawings

The invention is further explained by means of specific embodiments and examples thereof, with reference to the enclosed drawings, wherein:
figure 1 illustrates a pixelelement in an electrowetting element according to the present invention; and
figure 2 Illustrates an enlargement of the hydrophobic surface of the element illustrated in figure 1.

### Detailed description of Embodiments of the Invention

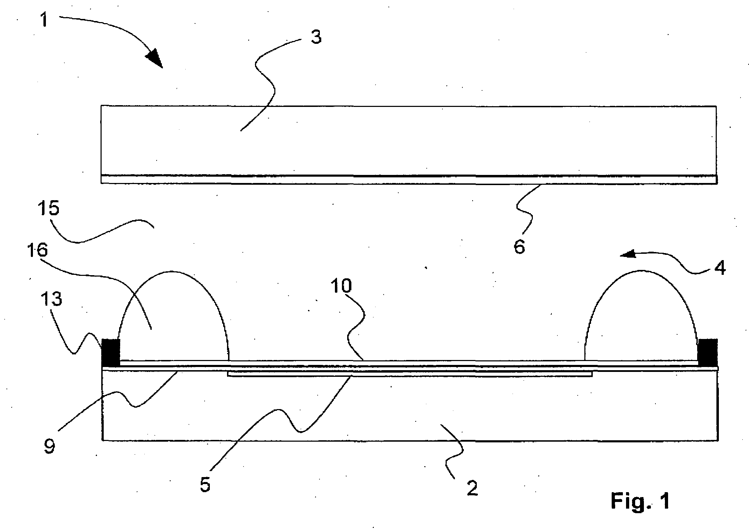

The invention is directed to an electrowetting element and use of a polar liquid in an electrowetting element. The enclosed figure 1 discloses a pixel element (generally indicated by 1), comprising a containment space 4 between a first substrate 2 and a second substrate 3. Substrate 3 may for example be comprised of a glass layer, while substrate 2 may be a reflective substrate or another glass layer, which may be contiguous to backlighting means of a display. Substrate 2 may also comprise a specular reflective surface such that the electrowetting element may be applied to a mirror for dimming the reflectivity thereof. This may for example be advantageous for use in self-dimming car mirrors. The invention is however not limited to this application, and the teachings may be applied to electrowetting elements in general, regardless of their specific application and use.

Contiguous to substrate 2 and 3, electrodes 5 and 6 may be present at either side of containment space 4. A voltage may be applied to electrodes 5 and 6 such as to switch the pixel element 1 on and off in an optically transmissive and non-transmissive state respectively, as will be explained below.

On top of electrode 5 insulating layer 9 provides electric insulation between the containment space and the reflector electrode. On top of insulating layer 9 a hydrophobic contact layer 10 is provided which is selected such that in an unpowered state the polar liquid is repelled from the hydrophobic surface, enabling the non-polar liquid to cover the complete surface of the pixel element 1. In the embodiment disclosed in figure 1, hydrophobic contact surface 10 is comprised of a fluoropolymer material layer.

In containment space 4, above fluoropolymer layer 10, pixel walls 13 separate pixel element 1 from adjacent pixel elements (not shown) of the electrowetting element. The containment space 4 is filled with a polar liquid 15. Every suitable polar liquid may be applied, however being a readily available and low-cost, water is used as the polar liquid of the present embodiment of the invention. In addition to the polar liquid, the pixel element further comprises a non-polar liquid 16. The polar liquid and non-polar liquid are immissible forming a polar-non-polar liquid interface. The oil used as non-polar liquid 16 may be decane or another suitable liquid, such as selected from a group comprising mineral oils, animal and vegetable oils, esters, high-boiling hydrocarbons, higher fatty acids, higher alcohols and polyolefins, in particular alkanes such as decane, vaseline, spindle oil, castor oil, olive oil, liquid paraffin and polybutene.

The pixel element 1 illustrated in figure 1 is switched on as illustrated. The non-polar liquid is pushed aside by the polar liquid, under influence of the electric field between the electrodes. The pixel is thereby in an optically transmissive state.

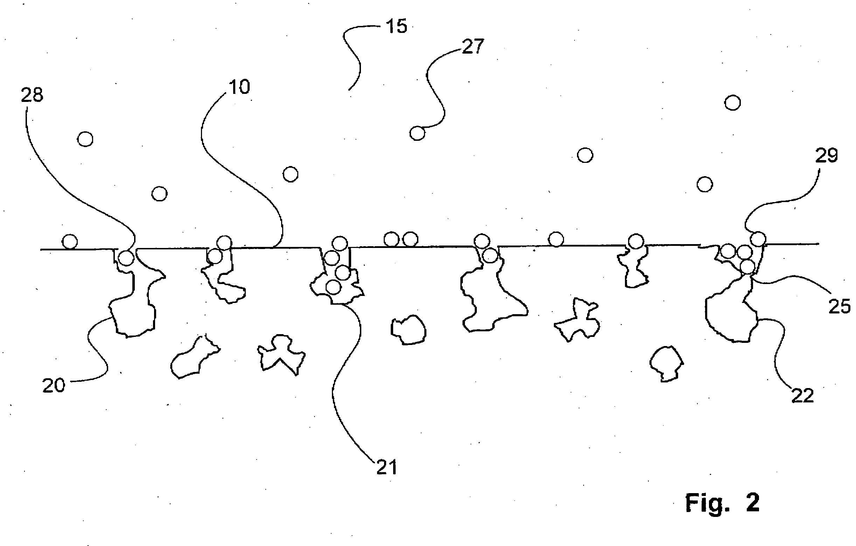

An schematic enlargement of hydrophobic surface layer 10 of pixel element 1 is illustrated in figure 2. Surface layer 10 comprises (intentional or unintentional) microvoids, such as voids 20, 21 and 22, as a result of the porosity of the surface. Polar liquid 15 comprises a plurality of particles, such as particle 27. These particles may be ions of a salt solved in said polar liquid, and are schematically indicated by spheres in figure 2. Note that suitable salts to be solved in the polar liquid may for example be calcium lactobionate monohydrate, or 4,4'-diazido-2,2'-stilbenedisulfonic acid disodium salt tetrahydrate. Other salts or substances may be suitable, in particular where these substances in said polar liquid 15 comprise charged particles. Instead of a salt solution one may use charged nano-particles, such as TiO₂ nano-particles, or suitable pigments. Note that the upper limit of the particle size is determined by optical considerations. The particles may not be too large such as to obstruct or interfere with light rays transmitted by said polar liquid.

The size of the particles, such as particles 27, 28, 29, is such that it matches an average void size of voids, such as voids 20, 21 and 22, present in said hydrophobic surface 10, for clogging one or more of said voids. An example is void 20, which is clogged by a single particle 28. The particles may also completely fill a void, such that it is clogged. An example thereof is shown in void 21 in figure 2. Also, as in void 22, the entrance 25 of a void 22, may be clogged by multiple particles, such as particle 29.

Clogging of the voids prevents the polar liquid from entraining the voids, preventing the problems of the prior art effectively.

Although the invention has been described with reference to the embodiments disclosed in figures 1 and 2, the invention may be practised differently, as will be apparent to the skilled reader. The scope of the invention is not limited by the embodiments disclosed, but is determined by the scope of the appended claims.

## Claims

1. Electrowetting element (1) comprising a first electrode layer (5) having a hydrophobic surface (10) and a second electrode layer (6) opposite said hydrophobic surface (10), a containment space (4) formed between said first (5) and said second (6) electrode layer, wherein said containment space (4) comprises at least one polar liquid (15) having a first conductivity and at least one non-polar liquid (16) having a second conductivity, said polar liquid (15) and non-polar liquid (16) being immiscible forming a polar non-polar liquid interface, and wherein said electrowetting element (1) further comprises powering means for controllably powering said first (5) and second (6) electrode layers for rearranging said polar liquid (15) relative to said non-polar liquid (16) for switching said electrowetting element between an optically transmissive and optically non-transmissive state, wherein at least one substance comprised of particles (27, 28, 29) is present in said containment space (4), **characterized in that**, said polar liquid (15) comprises said at least one substance, the particles (27, 28, 29) of which having a particle size matching an average void size of voids (20, 21, 22) present in said hydrophobic surface (10), for clogging one or more of said voids (20, 21, 22).

2. Electrowetting element according to claim 1, wherein said particle size is of a same order of magnitude as said average void size.

3. Electrowetting element according to claim 1, wherein said particle size is one order of magnitude smaller than said average void size.

4. Electrowetting element according to any of the previous claims, wherein said polar liquid comprises one or more substances comprising additional particles having one or more additional particle sizes.

5. Electrowetting element according to any of the previous claims, wherein said particles are electrically charged particles.

6. Electrowetting element according to any of the previous claims, wherein said substance is solvable in said polar liquid.

7. Electrowetting element according to any of the previous claims, wherein said particles of said substance are molecules of said substance, and said particle size is a molecular size of said molecules.

8. Electrowetting element according to claims 6 and 7, wherein said molecules are ions.

9. Electrowetting element according to any of the previous claims, wherein said substance is selected from a group comprising calcium lactobionate monohydrate, 4,4'-diazido-2,2'-stilbenedisulfonic acid disodium salt tetrahydrate, and other water solvable salts, nano-particles such as TiO₂ nano-particles, pigments.

10. Use of a polar liquid in an electrowetting element (1), said electrowetting element (1) comprising a first electrode layer (5) having a hydrophobic surface (10) and a second electrode layer 6 opposite said hydrophobic surface (10), a containment space (4) formed between said first (5) and said second (6) electrode layer, wherein said containment space (4) comprises said polar liquid (15) having a first conductivity and at least one non-polar liquid (16) having a second conductivity, said polar liquid (15) and non-polar liquid (16) being immiscible forming a polar non-polar liquid interface, and wherein said electrowetting element (1) further comprising powering means for controllably powering said first (5) and second (6) electrode layers for rearranging said polar liquid (15) relative to said non-polar liquid (16) for switching said electrowetting element (1) between an optically transmissive and optically non-transmissive state, wherein at least one substance comprised of particles (27, 28, 29) is present in said containment space, **characterized in that**, said polar liquid (15) comprises said at least one substance, the particles (27, 28, 29) of which having a particle size matching an average void size of voids (20, 21, 22) present in said hydrophobic surface, for clogging one or more of said voids (20, 21, 22).

11. Use according to claim 10, wherein said particle size is of a same order of magnitude as said average void size, or wherein said particle size is one order of magnitude smaller than said average void size.

12. Use according to any of the claims 10 or 11, wherein said polar liquid comprises one or more substances comprising additional particles having one or more additional particle sizes.

13. Use according to any of the claims 10-12, wherein said particles are electrically charged particles.

14. Use according to any of the claims 10-13, wherein said substance is solvable in said polar liquid.

15. Use according to any of the claims 10-14, wherein said particles of said substance are molecules of said substance, and said particle size is a molecular size of said molecules.

16. Use according to claims 14 and 15, wherein said molecules are ions.

17. Use according to any of the claims 10-16, wherein said substance is selected from a group comprising calcium lactobionate monohydrate, 4,4'-diazido-2,2'-stilbenedisulfonic acid disodium salt tetrahydrate, and other water solvable salts, nano-particles such as TiO₂ nano-particles, pigments.

## Patentansprüche

1. Elektrowettingelement (1), umfassend eine erste Elektrodenschicht (5) mit einer hydrophoben Oberfläche (10) und eine der hydrophoben Oberfläche (10) gegenüberliegende zweite Elektrodenschicht (6), einen zwischen der ersten Elektrodenschicht (5) der zweiten Elektrodenschicht (6) ausgebildeten Halteraum (4), wobei der Halteraum (4) mindestens eine polare Flüssigkeit (15) mit einer ersten Leitfähigkeit und mindestens eine unpolare Flüssigkeit (16) mit einer zweiten Leitfähigkeit umfasst, wobei die polare Flüssigkeit (15) und die unpolare Flüssigkeit (16), die nicht mischbar sind, eine polar-unpolar-Flüssigkeitsgrenzfläche bilden, und wobei das Elektrowettingelement (1) ferner Antriebsmittel zum steuerbaren Antreiben der ersten Elektrodenschicht (5) und zweiten Elektrodenschicht (6) zur Umlagerung der polaren Flüssigkeit (15) relativ zu der unpolaren Flüssigkeit (16) zum Umschalten des Elektrowettingelements zwischen einem optisch durchlässigen und einem optisch undurchlässigen Zustand, wobei in dem Halteraum (4) mindestens eine aus Teilchen (27, 28, 29) bestehende Substanz vorliegt, **dadurch gekennzeichnet, dass** die polare Flüssigkeit (15) mindestens eine Substanz, deren Teilchen (27, 28, 29) eine Teilchengröße aufweisen, die zu einer mittleren Hohlraumgröße von in der hydrophoben Oberfläche (10) vorliegenden Hohlräumen (20, 21, 22) passt, zum Verstopfen eines oder mehrerer der Hohlräume (20, 21, 22) umfasst.

2. Elektrowettingelement nach Anspruch 1, wobei die Teilchengröße die gleiche Größenordnung wie die durchschnittliche Hohlraumgröße hat.

3. Elektrowettingelement nach Anspruch 1, wobei die Teilchengröße um eine Größenordnung kleiner als die durchschnittliche Hohlraumgröße ist.

4. Elektrowettingelement nach einem der vorhergehenden Ansprüche, wobei die polare Flüssigkeit eine oder mehrere Substanzen, die zusätzliche Teilchen mit einer oder mehreren zusätzlichen Teilchengrößen umfassen, umfasst.

5. Elektrowettingelement nach einem der vorhergehenden Ansprüche, wobei es sich bei den Teilchen um elektrisch geladene Teilchen handelt.

6. Elektrowettingelement nach einem der vorhergehenden Ansprüche, wobei die Substanz in der polaren Flüssigkeit löslich ist.

7. Elektrowettingelement nach einem der vorhergehenden Ansprüche, wobei es sich bei den Teilchen der Substanz um Moleküle der Substanz handelt und es sich bei der Teilchengröße um eine Molekülgröße der Moleküle handelt.

8. Elektrowettingelement nach den Ansprüchen 6 und 7, wobei es sich bei den Molekülen um Ionen handelt.

9. Elektrowettingelement nach einem der vorhergehenden Ansprüche, wobei die Substanz aus einer Gruppe umfassend Calciumlactobionatmonohydrat, 4,4'-Diazido-2,2'-stilbendisulfonsäuredinatriumsalztetrahydrat und andere wasserlösliche Salze, Nanoteilchen wie TiO₂-Nanoteilchen und Pigmente ausgewählt ist.

10. Verwendung einer polaren Flüssigkeit in einem Elektrowettingelement (1), wobei das Elektrowettingelement (1) eine erste Elektrodenschicht (5) mit einer hydrophoben Oberfläche (10) und eine der hydrophoben Oberfläche (10) gegenüberliegende zweite Elektrodenschicht (6), einen zwischen der ersten Elektrodenschicht (5) der zweiten Elektrodenschicht (6) ausgebildeten Halteraum (4), wobei der Halteraum (4) die polare Flüssigkeit (15) mit einer ersten Leitfähigkeit und mindestens eine unpolare Flüssigkeit (16) mit einer zweiten Leitfähigkeit umfasst, wobei die polare Flüssigkeit (15) und die unpolare Flüssigkeit (16), die nicht mischbar sind, eine polar-unpolar-Flüssigkeitsgrenzfläche bilden, umfasst und wobei das Elektrowettingelement (1) ferner Antriebsmittel zum steuerbaren Antreiben der ersten Elektrodenschicht (5) und zweiten Elektrodenschicht (6) zur Umlagerung der polaren Flüssigkeit (15) relativ zu der unpolaren Flüssigkeit (16) zum Umschalten des Elektrowettingelements (1) zwischen einem optisch durchlässigen und einem optisch undurchlässigen Zustand, wobei in dem Halteraum mindestens eine aus Teilchen (27, 28, 29) bestehende Substanz vorliegt, **dadurch gekennzeichnet, dass** die polare Flüssigkeit (15) mindestens eine Substanz, deren Teilchen (27, 28, 29) eine Teilchengröße aufweisen, die zu einer mittleren Hohlraumgröße von in der hydrophoben Oberfläche (10) vorliegenden Hohlräumen (20, 21, 22) passt, zum Verstopfen eines oder mehrerer der Hohlräume (20, 21, 22) umfasst.

11. Verwendung nach Anspruch 10, wobei die Teilchengröße die gleiche Größenordnung wie die durchschnittliche Hohlraumgröße hat oder wobei die Teilchengröße um eine Größenordnung kleiner als die durchschnittliche Hohlraumgröße ist.

12. Verwendung nach Anspruch 10 oder 11, wobei die polare Flüssigkeit eine oder mehrere Substanzen, die zusätzliche Teilchen mit einer oder mehreren zusätzlichen Teilchengrößen umfassen, umfasst.

13. Verwendung nach einem der Ansprüche 10-12, wobei es sich bei den Teilchen um elektrisch geladene Teilchen handelt.

14. Verwendung nach einem der Ansprüche 10-13, wobei die Substanz in der polaren Flüssigkeit löslich ist.

15. Verwendung nach einem der Ansprüche 10-14, wobei es sich bei den Teilchen der Substanz um Moleküle der Substanz handelt und es sich bei der Teilchengröße um eine Molekülgröße der Moleküle handelt.

16. Verwendung nach einem der Ansprüche 14 und 15, wobei es sich bei den Molekülen um Ionen handelt.

17. Verwendung nach einem der Ansprüche 10-16, wobei die Substanz aus einer Gruppe umfassend Calciumlactobionatmonohydrat, 4,4'-Diazido-2,2'-stilbendisulfonsäuredinatriumsalztetrahydrat und andere wasserlösliche Salze, Nanoteilchen wie TiO₂-Nanoteilchen und Pigmente ausgewählt ist.

## Revendications

1. Élément d'électromouillage (1) comprenant une première couche d'électrode (5) ayant une surface hydrophobe (10) et une deuxième couche d'électrode (6) opposée à ladite surface hydrophobe (10), un espace de confinement (4) formé entre ladite première (5) et ladite deuxième (6) couches d'électrode, dans lequel ledit espace de confinement (4) comprend au moins un liquide polaire (15) ayant une première conductivité et au moins un liquide non polaire (16) ayant une deuxième conductivité, ledit liquide polaire (15) et ledit liquide non polaire (16) étant non miscibles formant une interface liquide polaire-non polaire, et dans lequel ledit élément d'électromouillage (1) comprend en outre un moyen d'alimentation pour alimenter de manière commandée lesdites première (5) et deuxième (6) couches d'électrode pour réagencer ledit liquide polaire (15) par rapport audit liquide non polaire (16) pour commuter ledit élément d'électromouillage entre un état optiquement transmissif et un état optiquement non transmissif, dans lequel au moins une substance composée de particules (27, 28, 29) est présente dans ledit espace de confinement (4),
**caractérisé en ce que** ledit liquide polaire (15) comprend ladite au moins une substance, dont les particules (27, 28, 29) ont une taille de particules correspondant à une taille de vide moyenne des vides (20, 21, 22) présents dans ladite surface hydrophobe (10), pour obstruer un ou plusieurs desdits vides (20, 21, 22).

2. Élément d'électromouillage selon la revendication 1, dans lequel ladite taille de particules est du même ordre de grandeur que celui de ladite taille de vide moyenne.

3. Élément d'électromouillage selon la revendication 1, dans lequel ladite taille de particules est d'un ordre de grandeur plus petit que celui de ladite taille de vide moyenne.

4. Élément d'électromouillage selon l'une des revendications précédentes, dans lequel ledit liquide polaire comprend une ou plusieurs substance(s) comprenant des particules supplémentaires ayant une ou plusieurs tailles de particules supplémentaires.

5. Élément d'électromouillage selon l'une des revendications précédentes, dans lequel lesdites particules sont des particules chargées électriquement.

6. Élément d'électromouillage selon l'une des revendications précédentes, dans lequel ladite substance est soluble dans ledit liquide polaire.

7. Élément d'électromouillage selon l'une des revendications précédentes, dans lequel lesdites particules de ladite substance sont des molécules de ladite substance, et ladite taille de particules est une taille moléculaire desdites molécules.

8. Élément d'électromouillage selon les revendications 6 et 7, dans lequel lesdites molécules sont des ions.

9. Élément d'électromouillage selon l'une des revendications précédentes, dans lequel ladite substance est choisie dans un groupe comprenant le lactobionate de calcium monohydraté, le tétrahydrate du sel disodique de l'acide 4,4'-diazido-2,2'-stilbènedisulfonique et d'autres sels hydrosolubles, des nanoparticules telles que les nanoparticules de TiO2, des pigments.

10. Utilisation d'un liquide polaire dans un élément d'électromouillage (1), ledit élément d'électromouillage (1) comprenant une première couche d'électrode (5) ayant une surface hydrophobe (10) et une deuxième couche d'électrode (6) opposée à ladite surface hydrophobe (10), un espace de confinement (4) formé entre ladite première (5) et ladite deuxième (6) couches d'électrode, dans lequel ledit espace de confinement (4) comprend ledit liquide polaire (15) ayant une première conductivité et au moins un liquide non polaire (16) ayant une deuxième conductivité, ledit liquide polaire (15) et ledit liquide non polaire (16) non miscibles formant une interface liquide polaire-non polaire, et dans lequel ledit élément d'électromouillage (1) comprend en outre un moyen d'alimentation pour alimenter de manière commandée lesdites première (5) et deuxième (6) couches d'électrode pour réagencer ledit liquide polaire (15) par rapport audit liquide non polaire (16) pour commuter ledit élément d'électromouillage (1) entre un état optiquement transmissif et un état optiquement non transmissif, dans lequel au moins une substance composée de particules (27, 28, 29) est présente dans ledit espace de confinement, **caractérisée en ce que** ledit liquide polaire (15) comprend ladite au moins une substance, dont les particules (27, 28, 29) ont une taille de particules correspondant à une taille de vide moyenne de vides (20, 21, 22) présents dans ladite surface hydrophobe, pour obstruer un ou plusieurs desdits vides (20, 21, 22).

11. Utilisation selon la revendication 10, dans laquelle ladite taille de particules est du même ordre de grandeur que celui de ladite taille de vide moyenne, ou dans laquelle ladite taille de particules est d'un ordre de grandeur plus petit que celui de ladite taille de vide moyenne.

12. Utilisation selon l'une des revendications 10 ou 11, dans laquelle ledit liquide polaire comprend une ou plusieurs substance(s) comprenant des particules supplémentaires ayant une ou plusieurs tailles de particules supplémentaires.

13. Utilisation selon l'une des revendications 10 à 12, dans laquelle lesdites particules sont des particules chargées électriquement.

14. Utilisation selon l'une des revendications 10 à 13, dans laquelle ladite substance est soluble dans ledit liquide polaire.

15. Utilisation selon l'une des revendications 10 à 14, dans laquelle lesdites particules de ladite substance sont des molécules de ladite substance, et ladite taille de particules est une taille moléculaire desdites molécules.

16. Utilisation selon les revendications 14 et 15, dans laquelle lesdites molécules sont des ions.

17. Utilisation selon l'une des revendications 10 à 16, dans laquelle ladite substance est choisie dans un groupe comprenant le lactobionate de calcium monohydraté, le tétrahydrate du sel disodique de l'acide 4,4'-diazido-2,2'-stilbènedisulfonique et d'autres sels hydrosolubles, des nanoparticules telles que les nanoparticules de TiO2, des pigments.
